# FASCICULE DE BREVET EUROPEEN

(11) **EP 0 565 163 B1**
(45) Date de publication et mention de la délivrance du brevet: **09.10.1996**
(21) Numéro de dépôt: 93200855.0
(22) Date de dépôt: 25.03.1993
(51) Int. Cl.: C08J 9/14, C08L 75/04

(54) **Mousses de polyuréthanes rigides et ignifuges**
Feuerfeste, harte Polyurethanschaumstoffe
Rigid fire-resistant polyurethane foams

(30) Priorité: 07.04.1992 BE 9200316
(43) Date de publication de la demande: 13.10.1993
(73) Titulaire: SOLVAY (Société Anonyme), B-1050 Bruxelles (BE)
(72) Inventeur: Barthelemy, Pierre, B-1315 Pietrebais (BE); Leroy, Annie, B-6637 Fauvillers (BE)
(74) Mandataire: Jacques, Philippe

(56) Documents cités:
- EP-A- 0 093 392
- US-A- 3 726 855
- US-A- 4 067 911
- US-A- 4 722 942
- CHEMICAL ABSTRACTS, vol. 111, no. 8, 21 Août 1989, Columbus, Ohio, US; abstract no. 58857m, GUBRUD, D. "blowing agent alternatives for sprayed polyurethane foam"

## Description

La présente invention concerne des mousses de polyuréthanes rigides ignifuges, des compositions destinées à leur fabrication, ainsi qu'un procédé de fabrication de ces mousses de polyuréthanes (ci-après désignés sous le vocable "PUR"). Elle concerne plus particulièrement des mousses de PUR rigides ignifuges et des compositions destinées à les produire à base de polyéthers-polyols halogénés et d'hydrocarbures chlorofluorés contenant de l'hydrogène (ci-après désignés sous le vocable "HFA") comme agent(s) gonflant(s).

Il est bien connu d'utiliser des polyéthers-polyols halogénés pour la fabrication de mousses de PUR rigides ignifuges par réaction avec des polyisocyanates organiques (US-A-4 067 911). Il est par ailleurs connu que les agents gonflants traditionnels du type des chlorofluoroalcanes complètement halogénés, tels que par exemple le trichlorofluorométhane qui constitue l'agent gonflant le plus utilisé, sont actuellement suspectés d'avoir un effet néfaste sur la couche d'ozone. De ce fait, on cherche de plus en plus à remplacer les agents gonflants usuels du type des chlorofluoroalcanes complètement halogénés par des HFA dont le potentiel destructeur de l'ozone (ODP) est nettement moins élevé. Parmi ceux-ci, le 1,1-dichloro-1-fluoréthane (HFA-141b) et le 1,1,1-trifluoro-2,2-dichloréthane (HFA-123) font figure d'agents gonflants utilisables pour fabriquer des mousses de PUR rigides, quoique leur utilisation présente un certain nombre d'inconvénients, tels que la réduction de la résistance au feu et de la stabilité dimensionnelle des mousses de PUR produites à leur intervention. La diminution de la résistance au feu peut être d'une ampleur telle qu'une mousse de PUR rigide fabriquée à l'intervention de polyéthers-polyols halogénés en présence d'un additif phosphoré et de trichlorofluorométhane comme agent gonflant, classée M₁ au test de l'épiradiateur (selon la norme française NF-P 92-501), n'est plus classée que M₂ dans ce même test lorsqu'on substitue ledit agent gonflant par le HFA-141b ou le HFA-123, toutes autres choses étant égales.

La présente invention a pour but de procurer des mousses de PUR rigides ignifuges produites à l'intervention de polyéthers-polyols halogénés et d'agents gonflants du type des HFA qui présentent un niveau d'ignifugation et une stabilité dimensionnelle améliorés. Elle concerne également une composition destinée à la fabrication de mousses de PUR rigides ignifuges comprenant des HFA à titre d'agents gonflants, ainsi qu'un procédé pour la fabrication de mousses de PUR rigides ignifuges.

A cet effet, l'invention concerne des mousses de PUR rigides ignifuges produites à l'intervention de polyéthers-polyols halogénés et d'au moins un agent gonflant choisi parmi le 1,1-dichloro-1-fluoréthane (HFA-141b) et le 1,1,1-trifluoro-2,2-dichloréthane (HFA-123) en présence d'éthylèneglycol.

L'invention concerne également une composition ("prémélange") destinée à la fabrication de mousses de PUR rigides ignifuges, caractérisée en ce qu'elle comprend à titre d'ingrédients essentiels au moins un polyéther-polyol halogéné, au moins un agent gonflant choisi parmi le 1,1-dichloro-1-fluoréthane (HFA-141b) et le 1,1,1-trifluoro-2,2-dichloréthane (HFA-123) et de l'éthylèneglycol.

L'invention concerne encore un procédé pour la fabrication de mousses de PUR rigides ignifuges par réaction de polyéthers-polyols halogénés avec des polyisocyanates organiques en présence d'un agent gonflant comprenant un hydrocarbure chlorofluoré contenant de l'hydrogène choisi parmi le 1,1-dichloro-1-fluoréthane (HFA-141b) et le 1,1,1-trifluoro-2,2-dichloréthane (HFA-123) et d'éthylèneglycol.

Par polyéthers-polyols halogénés, on entend désigner aux fins de la présente invention les polyéthers-polyols halogénés chlorés, bromés ou chlorobromés, consistant essentiellement en les produits d'addition d'oxydes d'alkènes dont une partie au moins est constituée d'oxydes d'alkènes halogénés, tels que l'épichlorhydrine, l'épibromhydrine, les oxydes de 3,3-dihalopropène et de 3,3,3-trihalopropène sur un polyol monomère initiateur, éventuellement halogéné, tel que par exemple l'éthylèneglycol, la glycérine, les monohalohydrines du glycérol, le dibromonéopentylglycol et le 2,3-dibromo-1,4-butènediol, ainsi que les mélanges de tels polyéthers-polyols halogénés. Des polyéthers-polyols halogénés de ce type, de nature essentiellement aliphatique, sont décrits, par exemple, dans les brevets belges 798 674 du 25 avril 1973, 821 314 du 22 octobre 1974 et le brevet européen 0 221 586 du 20 octobre 1986, tous au nom de la Demanderesse.

Quoique les polyéthers-polyols halogénés décrits ci-dessus constituent un des ingrédients essentiels des mousses de PUR selon l'invention (et des compositions destinées à produire ces mousses), il n'est pas exclu, en fonction du niveau d'ignifugation recherché, de mettre en oeuvre des mélanges de tels polyéthers-polyols halogénés avec des polyéthers-polyols non halogénés. Le concept "polyéthers-polyols halogénés" tel qu'utilisé dans le cadre de la présente invention englobe donc aussi bien les polyéthers-polyols halogénés que leurs mélanges avec des polyéthers-polyols non halogénés. De tels mélanges de polyéthers-polyols comprennent généralement au moins 30 % en poids de polyéthers-polyols halogénés, de préférence au moins 50 % en poids et plus particulièrement encore au moins 70 % en poids de polyéthers-polyols halogénés.

Il est entendu que l'indice d'hydroxyle moyen et la fonctionnalité moyenne des polyéthers-polyols halogénés tels que définis ci-dessus mis en oeuvre dans la présente invention sont ceux usuellement choisis pour produire des mousses de PUR rigides. En l'occurence, l'indice d'hydroxyle moyen des polyéthers-polyols (et leurs mélanges) mis en oeuvre sera égal à 250 mg KOH/g au moins et leur fonctionnalité moyenne à 3 au moins. De préférence, on utilisera des polyéthers-polyols halogénés et des mélanges en contenant dont l'indice d'hydroxyle moyen est compris entre 300 et 500 mg KOH/g environ. Leur fonctionnalité dépendra bien entendu de la fonctionnalité du polyol monomère initiateur utilisé pour les produire. En général, la fonctionnalité moyenne des polyéthers-polyols ne dépasse pas 8. De préférence, elle ne dépasse pas 4.

La présente invention résulte de la constatation que les mousses de PUR rigides produites à l'intervention de polyéthers-polyols halogénés, tels que définis ci-dessus, et d'au moins un agent gonflant choisi parmi HFA-141b et HFA-123 en présence d'éthylèneglycol présentent une résistance au feu et une stabilité dimensionnelle nettement améliorées. Un résultat totalement imprévisible résultant de la mise en oeuvre d'éthylèneglycol réside dans l'amélioration des propriétés ignifuges des mousses de PUR rigides. En effet, à indice d'isocyanate identique (i.e. rapport molaire entre l'ensemble des fonctions hydroxyles et les fonctions isocyanates), la mise en oeuvre d'éthylèneglycol implique l'utilisation d'une quantité supérieure de polyisocyanate organique, ce qui revient en somme à réduire la teneur en polyéther-polyol halogéné ignifugeant dans la composition mise en oeuvre pour produire la mousse de PUR rigide. Un effet surprenant de la présente invention réside par ailleurs dans le fait que l'utilisation d'autres polyols aliphatiques, tels que la glycérine, polyol aliphatique dont l'indice d'hydroxyle est pratiquement identique à celui de l'éthylèneglycol, n'a pas d'effet bénéfique sur les propriétés ignifuges des mousses de PUR produites.

La quantité d'éthylèneglycol présente dans les mousses rigides de PUR (et dans les compositions destinées à les produire) selon l'invention n'est pas particulièrement critique. Des quantités aussi faibles que 0,5 partie d'éthylèneglycol pour 100 parties en poids de polyéthers-polyols produisent généralement déjà un effet positif mesurable sur la résistance au feu et la déformation linéaire (retrait) de la mousse rigide de PUR. On préfère néanmoins en mettre en oeuvre au moins environ 1 partie, plus particulièrement au moins environ 1,5 partie pour 100 parties en poids de polyéthers-polyols (au total). Dans certaines limites, l'augmentation de la teneur en éthylèneglycol améliore encore les résultats. On n'a toutefois aucun intérêt à dépasser une dose d'éthylèneglycol d'environ 6,5 parties pour 100 parties en poids de polyéthers-polyols. Généralement, la dose n'excède pas environ 5 parties et plus particulièrement environ 4 parties pour 100 parties en poids de polyéthers-polyols.

Les agents gonflants HFA-141b et HFA-123 mis en oeuvre pour produire les mousses de PUR selon l'invention peuvent être mis en oeuvre seul ou en mélange ou encore en mélange avec des agents gonflants traditionnels.

Néanmoins, on préfère que la totalité de l'agent gonflant soit constituée de HFA-141b et/ou de HFA-123. De préférence, la totalité de l'agent gonflant mis en oeuvre à la fabrication de mousses de PUR rigides selon l'invention est constituée de HFA-141b.

La quantité d'agent gonflant à mettre en oeuvre dépend bien entendu de la densité de mousse recherchée. Pour fixer les idées, l'agent gonflant est généralement mis en oeuvre (et est présent dans les mousses de PUR et dans les compositions destinées à leur fabrication) à raison d'environ 10 à 35 parties pour 100 parties en poids de polyéthers-polyols et, en particulier, à raison d'environ 15 à 30 parties pour 100 parties en poids de polyéthers-polyols. La mise en oeuvre de l'agent gonflant (ou du mélange d'agents gonflants) dans les quantités précitées conduit généralement à des mousses de PUR rigides dont la masse volumique apparente en moule fermé est comprise entre 20 et 60 kg/m³ environ et, en particulier, entre 30 et 40 kg/m³ environ.

Suivant un mode de réalisation préféré de l'invention, les mousses de PUR rigides sont produites en présence également d'un composé organique phosphoré. Il est bien connu d'améliorer l'ignifugation des mousses de PUR rigides par incorporation de composés organiques phosphorés, généralement des esters phosphoriques ou des phosphonates, éventuellement halogénés.

L'emploi de ces additifs phosphorés qui agissent en synergie avec les polyéthers-polyols halogénés sur le plan de l'ignifugation est généralement recommandé pour atteindre les niveaux d'ignifugation les plus élevés, tels que le classement M₁ au test de l'épiradiateur (selon la norme NF-P 92-501). Ils présentent néanmoins l'inconvénient notoire d'avoir un effet plastifiant sur les mousses rigides de PUR et, de ce fait, de réduire leurs propriétés mécaniques et notamment leur stabilité dimensionnelle. La mise en oeuvre d'éthylèneglycol à la fabrication de mousses de PUR à l'intervention de polyéthers-polyols halogénés et d'agent gonflant HFA-141b et/ou HFA-123 en présence de composés organiques phosphorés est particulièrement intéressante, en ce qu'elle permet de neutraliser les effets indésirables liés à la présence d'additifs phosphorés sur les propriétés mécaniques des mousses rigides de PUR, sans nuire à leurs propriétés d'ignifugation.

A titre d'exemples non limitatifs de composés organiques phosphorés pouvant être utilisés pour la fabrication des mousses de PUR rigides préférées selon l'invention (et des compositions destinées à les produire), on peut mentionner des phosphates organiques tels que les phosphates de triéthyle (TEP), de tris(chloropropyle) (TCPP) ou encore des phosphonates, tels que par exemple le diméthylphosphonate.

La quantité de ces additifs phosphorés présente dans les mousses de PUR rigides selon l'invention (et dans les compositions destinées à les préparer) peut varier dans certaines limites en fonction de l'effet d'ignifugation recherché. Pour fixer les idées, cette quantité peut varier entre 0,5 et 6 parties environ, exprimées en phosphore, pour 100 parties en poids de polyéthers-polyols. Généralement, il n'est pas utile de dépasser une teneur de 5 parties environ, exprimée en phosphore, pour 100 parties en poids de polyéthers-polyols. De préférence, les mousses de PUR rigides (et les compositions destinées à les fabriquer) selon l'invention contiennent des composés organiques phosphorés en des quantités correspondant à 0,8 à 4,9 parties environ et, plus particulièrement encore, à 0,8 à 3 parties environ, exprimées en phosphore, pour 100 parties en poids de polyéthers-polyols. La présence simultanée d'éthylèneglycol et de l'additif organique phosphoré procède d'un effet de synergie sur le plan de la résistance au feu.

Les polyéthers-polyols halogénés tels que définis, au moins un agent gonflant choisi parmi HFA-141b et HFA-123, l'éthylèneglycol et le cas échéant un composé organique phosphoré constituent donc les ingrédients caractéristiques et essentiels des mousses de PUR rigides ignifuges selon l'invention et des compositions destinées à leur fabrication. Il va de soi que pour fabriquer des mousses de PUR à l'intervention de polyéthers-polyols, il convient de faire réagir ceux-ci avec des polyisocyanates organiques.

A cet effet, l'invention concerne un procédé pour la fabrication de mousses de PUR rigides ignifuges par réaction de polyéthers-polyols halogénés avec des polyisocyanates organiques en présence d'un agent gonflant, caractérisé en ce que l'agent gonflant comprend un hydrocarbure chlorofluoré contenant de l'hydrogène choisi parmi le 1,1-dichloro-1-fluoréthane (HFA-141b) et le 1,1,1-trifluoro-2,2-dichloréthane (HFA-123) et en ce que la réaction s'effectue en présence d'éthylèneglycol.

Tous les polyisocyanates organiques connus couramment utilisés pour la fabrication de mousses de PUR rigides peuvent être mis en oeuvre dans le procédé de l'invention. A titre d'exemples non limitatifs de polyisocyanates utilisables, on peut mentionner le bis-(4-phénylisocyanate) de méthylène à l'état pur ou partiellement polymérisé, les diisocyanates de tolylène à l'état pur ou partiellement polymérisé et le 1,5-diisocyanate de naphtalène.

La quantité théorique de polyisocyanate organique nécessaire à la fabrication de PUR est calculée, de manière connue, en fonction de l'indice d'hydroxyle global, c'est-à-dire celui du ou des polyéthers-polyols, de l'éthylèneglycol et, le cas échéant, de l'eau présents dans les formulations. On utilise avantageusement un léger excès de polyisocyanate, par exemple un indice de 105 au moins en vue d'améliorer la résistance à la distorsion à chaud de la mousse. Généralement, l'indice d'isocyanate ne dépasse pas 150. De préférence, il est compris entre 105 et 120 environ.

Outre les ingrédients essentiels décrits plus haut qu'il convient de mettre en oeuvre dans le procédé de fabrication des mousses de PUR rigides ignifuges selon l'invention (i.e. des polyéthers-polyols halogénés, des polyisocyanates organiques, au moins un agent gonflant choisi parmi HFA-141b et HFA-123, de l'éthylèneglycol et, le cas échéant, un composé organique phosphoré), le milieu de réaction contiendra bien entendu tous les ingrédients usuels de la fabrication de mousses de PUR, à savoir un ou plusieurs catalyseurs, éventuellement de l'eau, des agents tensioactifs et/ou stabilisants, des matières de charge, des pigments, etc.

Le catalyseur peut être l'un quelconque des catalyseurs connus comme étant utilisés à cet effet, notamment les amines tertiaires telles que la N,N-diméthylbenzylamine, la triéthylènediamine, la triéthylamine, le diméthylaminoéthanol, ainsi que les sels d'antimoine, d'étain et de fer.

La quantité de catalyseur peut varier dans une certaine mesure. On utilise généralement de l'ordre de 0,5 à 4 % en poids de catalyseur par rapport aux polyéthers-polyols.

L'agent tensioactif (contribuant à améliorer la structure cellulaire) est généralement présent à raison de 0,2 à 2 % en poids environ par rapport aux polyéthers-polyols.

Les mousses de PUR rigides selon l'invention peuvent être fabriquées par tous les procédés classiques de moussage, tels que le procédé en une étape, dit "one shot", les procédés utilisant un prémélange, un prépolymère ou un semi- prépolymère, le procédé de pré-expansion dit "frothing".

Un procédé auquel on donne la préférence est celui utilisant un prémélange dans lequel on met en oeuvre une composition comprenant à titre d'ingrédients essentiels les polyéthers-polyols et l'agent gonflant, les polyisocyanates organiques n'étant mis en réaction avec cette composition (généralement appelée "prémélange") qu'au moment de la fabrication de la mousse de PUR. Outre les ingrédients essentiels précités, ces compositions contiennent tous les ingrédients usuels des prémélanges, à savoir des catalyseurs, le cas échéant de l'eau, des agents tensioactifs ou stabilisants, des pigments, des charges etc. tels que décrits ci-dessus et, par ailleurs, bien connus de l'homme du métier.

Les compositions selon l'invention contenant à titre d'ingrédients essentiels au moins un polyéther-polyol halogéné, au moins un agent gonflant choisi parmi le 1,1-dichloro-1-fluoréthane et le 1,1,1-trifluoro-2,2-dichloréthane et de l'éthylèneglycol, ainsi que le cas échéant un composé organique phosphoré, conviennent tout particulièrement pour la fabrication de mousses de PUR rigides selon l'invention par le procédé du prémélange.

Les mousses de PUR rigides ignifuges de l'invention sont utilisables dans tous les domaines d'utilisation traditionnels des mousses de PUR rigides où la résistance au feu constitue une propriété désirable, voire indispensable, tels que la construction, l'ameublement et l'isolation thermique.

Les exemples qui suivent sont destinés à illustrer l'invention. Tous illustrent des mousses de PUR rigides ignifuges produites au départ de prémélanges (compositions) à base de polyéthers-polyols halogénés comprenant un agent gonflant choisi parmi HFA-141b et HFA-123 mis en réaction avec un polyisocyanate organique constitué de bis (4-phénylisocyanate) de méthylène brut (MDI brut) mis en oeuvre à l'indice 110. Dans tous les exemples, le catalyseur est une amine tertiaire (N,N-diméthylbenzylamine). Les formulations complètes mises en oeuvre dans les exemples figurent dans les Tableaux I à IV en annexe.

Les mousses de PUR rigides sont produites à la main suivant le mode opératoire général ci-dessous.

Dans un bol de mélange, on introduit successivement le polyéther-polyol, l'agent tensioactif (silicone), l'eau et l'agent gonflant. Après une première agitation, le catalyseur est additionné. Le polyisocyanate est ensuite ajouté au prémélange parfaitement homogène. Le mélange résultant est immédiatement agité puis coulé dans un moule où s'effectue l'expansion et le mûrissage de la mousse.

Sur les blocs de mousses de PUR rigides ainsi produits, on a évalué la masse volumique apparente nette en moule fermé (MVA), la déformation linéaire avant découpe après stockage de 1 mois à l'air ambiant, la stabilité dimensionnelle selon la norme ISO 2796 et enfin le classement au test de l'épiradiateur suivant la norme française NF-P 92-501.

### Exemples 1 à 3 (cf. Tableau I)

Dans les exemples 1 à 3, on met en oeuvre un polyéther-polyol chlorobromé (commercialisé sous la marque IXOL^{®} B350) dont les principales caractéristiques sont :
- indice d'hydroxyle 353 mg KOH/g
- poids équivalent 159
- fonctionnalité moyenne 3
- teneur en chlore env. 7,3 % en poids
- teneur en brome env. 34,2 % en poids

Les exemples 1 et 2, selon l'invention, illustrent des mousses de PUR rigides fabriquées au départ de prémélanges (compositions) contenant 2 parties d'éthylèneglycol (EG) pour 100 parties en poids de polyéther-polyol IX0L^{®} B350. Le prémélange de l'exemple 3R, donné à titre de comparaison, est exempt d'éthylèneglycol. Dans l'exemple 1, l'agent gonflant est HFA-123. Dans les exemples 2 et 3R l'agent gonflant est HFA-141b.

Les mousses de PUR rigides produites (cf. Tableau I) dans les exemples 1 et 2 selon l'invention sont classées M₁ au test de l'épiradiateur alors que la mousse produite selon l'exemple 3R (en absence d'éthylèneglycol) est classée M₂ dans ce même test. En outre, les mousses produites selon les exemples 1 et 2 présentent une déformation linéaire après stockage pendant 1 mois (retrait) identique, sinon inférieure et une stabilité dimensionnelle supérieure à celle d'une mousse produite en l'absence d'éthylèneglycol (exemple 3R, de comparaison).

### Exemples 4 à 15

Dans les exemples 4 à 15, on met en oeuvre un polyéther-polyol chlorobromé contenant un diluant phosphoré (commercialisé sous la marque IXOL^{®} B251) dont les principales caractéristiques sont :
- indice d'hydroxyle 330 mg KOH/g
- poids équivalent 170
- fonctionnalité moyenne 3
- teneur en chlore env. 6,8 % en poids
- teneur en brome env. 32 % en poids
- teneur en phosphore env. 1,1 % en poids

### Exemples 4 à 8 (cf. Tableau II)

Dans les exemples 4 à 8, l'agent gonflant est HFA-123. Les exemples 6 et 7, selon l'invention, illustrent des mousses de PUR rigides produites au départ de prémélanges contenant 10 parties de triéthylphosphate (TEP) et respectivement 2 et 4 parties d'éthylèneglycol (EG) pour 100 parties en poids de polyéther-polyol IXOL^{®} B251 (contenant déjà un diluant phosphoré).

L'exemple 4R, donné à titre comparatif, concerne un prémélange exempt de TEP et d'éthylèneglycol. L'exemple 5R, donné à titre comparatif, concerne un prémélange contenant 10 parties de TEP, mais pas d'éthylèneglycol.

L'exemple 8R, donné à titre comparatif, concerne un prémélange contenant 10 parties de TEP et 4 parties de glycérine.

La mousse de PUR rigide produite à l'exemple 4R (cf. Tableau II) est classée M₂ au test de l'épiradiateur et présente un retrait de 0,5 %. La mousse produite à l'exemple 5R au départ d'un prémélange enrichi en additif phosphoré (TEP) est classée M₁ au test de l'épiradiateur, mais le retrait de la mousse s'élève à 2 %. La mousse produite à l'exemple 6, selon l'invention (en présence de 2 parties d'EG) est classée M₁ au test de l'épiradiateur avec un retrait réduit à 0,9 %. La mousse produite à l'exemple 7, selon l'invention (en présence de 4 parties d'EG) est toujours classée M₁ au test de l'épiradiateur avec un retrait réduit à 0,6 %, i.e. du même ordre de grandeur que celui d'une mousse produite au départ d'un prémélange nettement moins riche en diluant phosphoré classé M₂ au test de l'épiradiateur (exemple 4R) et, par ailleurs, nettement plus faible qu'une mousse produite à l'intervention d'un prémélange contenant la même teneur en additif phosphoré classée M₁ (exemple 5R). Enfin l'exemple 8R atteste que l'addition de 4 parties de glycérine au prémélange produit, toutes autres choses étant égales, des mousses classées M₂ au test de l'épiradiateur dont le retrait est supérieur à celui de mousses produites à l'intervention d'une même quantité d'éthylèneglycol.

### Exemples 9R à 11 (cf. Tableau III)

Dans les exemples 9R à 11, l'agent gonflant est HFA-141b. L'exemple 11, selon l'invention, illustre une mousse de PUR rigide produite au départ d'un prémélange contenant 10 parties de triéthylphosphate (TEP) et 4 parties d'éthylèneglycol (EG) pour 100 parties en poids de polyéthers-polyols IXOL® B251.

L'exemple 9R, donné à titre comparatif, concerne un prémélange exempt de TEP et d'éthylèneglycol. L'exemple 10R, donné à titre comparatif, concerne un prémélange contenant 10 parties de TEP, mais pas d'éthylèneglycol.

La mousse de PUR rigide produite à l'exemple 9R (cf. Tableau III) est classée M₂ au test de l'épiradiateur et présente un retrait de 0,4 %. La mousse produite à l'exemple 10R au départ d'un prémélange enrichi en additif phosphoré (TEP) est classée M₁ au test de l'épiradiateur, mais le retrait de la mousse s'élève à 1,5 %. La mousse produite à l'exemple 11, selon l'invention (en présence de 4 parties d'EG) est classée M₁ au test de l'épiradiateur avec un retrait réduit à 0,4 %, c'est-à-dire égal à celui d'une mousse classée M₂ produite à partir d'un prémélange nettement moins riche en additif phosphoré (exemple 9R) et, par ailleurs, nettement plus faible que celui d'une mousse classée également M₁ produite à partir d'un prémélange contenant la même quantité d'additif phosphoré (mais pas d'éthylèneglycol) (exemple 10R).

### Exemples 12R à 15 (cf. Tableau IV)

Les exemples 14 et 15, selon l'invention, illustrent des mousses de PUR rigides produites au départ de prémélanges contenant 10 parties de tris(chloropropyl)phosphate (TCPP) et respectivement 2 et 4 parties d'éthylèneglycol (EG) pour 100 parties en poids de polyéthers-polyols IXOL® B251.

L'exemple 12R, donné à titre comparatif, concerne un prémélange contenant 10 parties de TCPP mais exempt d'éthylèneglycol. L'exemple 13R, donné à titre comparatif, concerne un prémélange contenant 10 parties de TCPP et 4 parties de glycérine.

La mousse de PUR rigide produite à l'exemple 12R est classée M₂ au test de l'épiradiateur et présente un retrait de 1,6 %. La mousse produite à l'exemple 13R au départ d'un prémélange à même teneur en additif phosphoré que les prémélanges selon les exemples 14 et 15, mais contenant 4 parties de glycérine conduit à une mousse classée M₂ au test de l'épiradiateur dont le retrait est supérieur à celui de la mousse produite à l'intervention de 4 parties d'EG (exemple 15) et du même ordre de grandeur qu'une mousse produite à l'intervention de seulement 2 parties d'EG (exemple 14).

**TABLEAU I**

| N° de l'exemple | 1 | 2 | 3R |
|---|---|---|---|
| Composition du prémélange, parties en poids | | | |
| Polyéther-polyol IXOL^{®} B350 | 100 | 100 | 100 |
| Ethylèneglycol | 2 | 2 | - |
| Silicone | 2 | 2 | 2 |
| Eau | 1 | 1 | 1 |
| HFA-123 | 27 | - | - |
| HFA-141b | - | 22 | 23 |
| Catalyseur | 2 | 2 | 2,2 |
| MDI, indice d'isocyanate 110 | 110,5 | 120,5 | 110,5 |
| Evaluation de la mousse de PUR | | | |
| Temps de crème, s | 41 | 43 | 43 |
| Temps de fil, s | 97 | 102 | 104 |
| MVA, kg/m³ | 36 | 35,6 | 35,2 |
| Déformation linéaire, % (retrait) | 0,2 | 0,1 | 0,2 |
| Stabilité dimensionnelle (ISO 2796) | | | |
| - après 7 jours à 100° C, % | 2,25 | 1 | 2 |
| - après 7 jours à 70° C, 90 % HR, % | 2 | 1 | 2,5 |
| - après 7 jours à -30° C, % | -1,25 | 0 | -2,5 |
| Classement au test de l'épiradiateur (NF-P 92-501) | M₁ | M₁ | M₂ |

**TABLEAU II**

| N° de l'exemple | 4R | 5R | 6 | 7 | 8R |
|---|---|---|---|---|---|
| Composition du prémélange,* parties en poids | | | | | |
| Polyéther-polyol IXOL^{®} B251 | 100 | 100 | 100 | 100 | 100 |
| TEP | - | 10 | 10 | 10 | 10 |
| Ethylèneglycol | - | - | 2 | 4 | - |
| Glycérine | - | - | - | - | 4 |
| Silicone | 2 | 2 | 2 | 2 | 2 |
| Eau | 1 | 1 | 1 | 1 | 1 |
| HFA-123 | 28 | 29 | 30 | 30 | 30 |
| Catalyseur | 2 | 2,2 | 2,2 | 2,2 | 2,2 |
| * Teneur en phosphore, parties pour 100 parties de polyéther-polyol | 1,1 | 3,4 | 3,4 | 3,4 | 3,4 |
| MDI, indice d'isocyanate 110 | 104,3 | 104,3 | 113,9 | 123,6 | 123,7 |
| Evaluation de la mousse de PUR | | | | | |
| Temps de crème, s | 44 | 43 | 45 | 46 | 47 |
| Temps de fil, s | 108 | 103 | 106 | 102 | 113 |
| MVA, kg/m³ | 36 | 35,4 | 36 | 36,2 | 36,2 |
| Déformation linéaire, % (retrait) | 0,5 | 2 | 0,9 | 0,6 | 1,2 |
| Stabilité dimensionnelle (ISO 2796) | | | | | |
| - après 7 jours à 100° C, % | 3 | 4,75 | 3 | 2 | 2,5 |
| - après 7 jours à 70° C, 90 % HR, % | 3 | 5,25 | 4 | 2 | 3,5 |
| - après 7 jours à -30° C, % | 0 | 0 | 0 | 0 | 0 |
| Classement au test de l'épiradiateur (NF-P 92-501) | M₂ | M₁ | M₁ | M₁ | M₂ |

**TABLEAU III**

| N° de l'exemple | 9R | 10R | 11 |
|---|---|---|---|
| Composition du prémélange,* parties en poids | | | |
| Polyéther-polyol IXOL^{®} B251 | 100 | 100 | 100 |
| TEP | - | 10 | 10 |
| Ethylèneglycol | - | - | 4 |
| Silicone | 2 | 2 | 2 |
| Eau | 1 | 1 | 1 |
| HFA-141b | 23 | 22 | 24 |
| Catalyseur | 2 | 2 | 2,2 |
| * Teneur en phosphore, parties pour 100 parties de polyéther-polyol | 1,1 | 3,4 | 3,4 |
| MDI, indice d'isocyanate 110 | 104,3 | 104,3 | 123,6 |
| Evaluation de la mousse de PUR | | | |
| Temps de crème, s | 45 | 43 | 48 |
| Temps de fil, s | 110 | 107 | 103 |
| MVA, kg/m³ | 35,7 | 36,2 | 35,3 |
| Déformation linéaire, % (retrait) | 0,4 | 1,5 | 0,4 |
| Stabilité dimensionnelle (ISO 2796) | | | |
| - après 7 jours à 100° C, % | 2,5 | 4,5 | 2 |
| - après 7 jours à 70° C, 90 % HR, % | 2 | 4,5 | 1 |
| - après 7 jours à -30° C, % | 0 | 0 | 0 |
| Classement au test de l'épiradiateur (NF-P 92-501) | M₂ | M₁ | M₁ |

**TABLEAU IV**

| N° de l'exemple | 12R | 13R | 14 | 15 |
|---|---|---|---|---|
| Composition du prémélange,* parties en poids | | | | |
| Polyéther-polyol IXOL^{®} B251 | 100 | 100 | 100 | 100 |
| TCPP | 10 | 10 | 10 | 10 |
| Ethylèneglycol | - | - | 2 | 4 |
| Glycérine | - | 4 | - | - |
| Silicone | 2 | 2 | 2 | 2 |
| Eau | 1 | 1 | 1 | 1 |
| HFA-141b | 22 | 24 | 23 | 24 |
| Catalyseur | 2,2 | 2,2 | 2,2 | 2,2 |
| * Teneur en phosphore, parties pour 100 parties de polyéther-polyol | 2,1 | 2,1 | 2,1 | 2,1 |
| MDI, indice d'isocyanate 110 | 104,3 | 123,7 | 113,9 | 123,4 |
| Evaluation de la mousse de PUR | | | | |
| Temps de crème, s | 42 | 45 | 40 | 42 |
| Temps de fil, s | 95 | 102 | 90 | 93 |
| MVA, kg/m³ | 36,1 | 36 | 35,6 | 36,2 |
| Déformation linéaire, % (retrait) | 1,6 | 0,9 | 1 | 0,7 |
| Stabilité dimensionnelle (ISO 2796) | | | | |
| - après 7 jours à 100° C, % | 2,5 | 1,25 | 2,25 | 1,5 |
| - après 7 jours à 70° C, 90 % HR, % | 2,25 | 1,25 | 2 | 1,25 |
| - après 7 jours à -30° C, % | 0 | 0 | 0 | 0 |
| Classement au test de l'épiradiateur (NF-P 92-501) | M₂ | M₂ | M₁ | M₁ |

## Revendications

1. Mousses de polyuréthanes rigides ignifuges produites à l'intervention de polyéthers-polyols halogénés et d'au moins un agent gonflant choisi parmi le 1,1-dichloro-1-fluoréthane et le 1,1,1-trifluoro-2,2-dichloréthane en présence d'éthylèneglycol.

2. Mousses de polyuréthanes rigides ignifuges selon la revendication 1, caractérisées en ce qu'elles sont produites en présence d'éthylèneglycol présent à raison de 0,5 partie au moins pour 100 parties en poids de polyéthers-polyols halogénés.

3. Mousses de polyuréthanes rigides ignifuges selon la revendication 1, caractérisées en ce qu'elles sont produites en présence d'éthylèneglycol présent à raison de 6,5 parties au plus pour 100 parties de polyéthers-polyols halogénés.

4. Mousses de polyuréthanes rigides ignifuges selon la revendication 1, caractérisées en ce qu'elles sont produites en présence également d'un composé organique phosphoré choisi parmi les esters phosphoriques et les phosphonates.

5. Mousses de polyuréthanes rigides ignifuges selon la revendication 4, caractérisées en ce qu'elles sont produites en présence d'un composé organique phosphoré présent à raison de 0,5 à 6 parties environ, exprimées en phosphore, pour 100 parties en poids de polyéthers-polyols halogénés.

6. Mousses de polyuréthanes rigides ignifuges selon l'une quelconque des revendications 1 à 5, caractérisées en ce que l'agent gonflant est constitué de 1,1-dichloro-1-fluoréthane.

7. Compositions destinées à la fabrication de mousses de polyuréthanes rigides ignifuges, caractérisées en ce qu'elles comprennent à titre d'ingrédients essentiels au moins un polyéther-polyol halogéné, au moins un agent gonflant choisi parmi le 1,1-dichloro-1-fluoréthane et le 1,1,1-trifluoro-2,2-dichloréthane et de l'éthylèneglycol.

8. Compositions selon la revendication 7, caractérisées en ce que l'éthylèneglycol est présent à raison de 0,5 partie au moins pour 100 parties en poids de polyéthers-polyols halogénés.

9. Compositions selon la revendication 7, caractérisées en ce que l'éthylèneglycol est présent à raison de 6,5 parties au plus pour 100 parties de polyéthers-polyols halogénés.

10. Compositions selon la revendication 7, caractérisées en ce qu'elles comprennent également un composé organique phosphoré choisi parmi les esters phosphoriques et les phosphonates.

11. Compositions selon la revendication 10, caractérisées en ce que le composé organique phosphoré est présent à raison de 0,5 à 6 parties environ, exprimées en phosphore, pour 100 parties en poids de polyéthers-polyols halogénés.

12. Compositions selon l'une quelconque des revendications 7 à 11, caractérisées en ce que l'agent gonflant est constitué de 1,1-dichloro-1-fluoréthane.

13. Procédé pour la fabrication de mousses de polyuréthanes rigides ignifuges par réaction de polyéthers-polyols halogénés avec des polyisocyanates organiques en présence d'un agent gonflant, caractérisé en ce que l'agent gonflant comprend un hydrocarbure chlorofluoré contenant de l'hydrogène choisi parmi le 1,1-dichloro-1-fluoréthane et le 1,1,1-trifluoro-2,2-dichloréthane et en ce que la réaction est effectuée en présence d'éthylèneglycol.

14. Procédé selon la revendication 13, caractérisé en ce que l'éthylèneglycol est mis en oeuvre à raison de 0,5 partie au moins pour 100 parties en poids de polyéthers-polyols halogénés.

15. Procédé selon la revendication 13, caractérisé en ce que l'éthylèneglycol est présent à raison de 6,5 parties au plus pour 100 parties en poids de polyéthers-polyols halogénés.

16. Procédé selon la revendication 13, caractérisé en ce que la réaction s'effectue en présence également d'un composé organique phosphoré choisi parmi les esters phosphoriques et les phosphonates.

17. Procédé selon la revendication 16, caractérisé en ce que le composé organique phosphoré est mis en oeuvre à raison de 0,5 à 6 parties environ, exprimées en phosphore, pour 100 parties en poids de polyéthers-polyols halogénés.

18. Procédé selon l'une quelconque des revendications 13 à 17, caractérisé en ce que l'agent gonflant est constitué de 1,1-dichloro-1-fluoréthane.

## Patentansprüche

1. Feuerfeste harte Polyurethanschaumstoffe, die unter Beteiligung von halogenierten Polyether-Polyolen und wenigstens eines Treibmittels, das unter 1,1 -Dichlor-1 -fluorethan und 1,1,1-Trifluor-2,2-dichlorethan ausgewählt ist, in Gegenwart von Ethylenglykol hergestellt werden.

2. Feuerfeste harte Polyurethanschaumstoffe gemäß Anspruch 1, dadurch gekennzeichnet, daß sie in Gegenwart von Ethylenglykol hergestellt werden, das in einer Menge von wenigstens 0,5 Teil pro 100 Gewichtsteile halogenierte Polyether-Polyole vorhanden ist.

3. Feuerfeste harte Polyurethanschaumstoffe gemäß Anspruch 1, dadurch gekennzeichnet, daß sie in Gegenwart von Ethylenglykol hergestellt werden, das in einer Menge von höchstens 6,5 Teilen pro 100 Teile halogenierte Polyether-Polyole vorhanden ist.

4. Feuerfeste harte Polyurethanschaumstoffe gemäß Anspruch 1, dadurch gekennzeichnet, daß sie auch in Gegenwart einer organischen Phosphorverbindung, die unter den Phosphorestern und Phosphonaten ausgewählt ist, hergestellt werden.

5. Feuerfeste harte Polyurethanschaumstoffe gemäß Anspruch 4, dadurch gekennzeichnet, daß sie in Gegenwart einer organischen Phosphorverbindung hergestellt werden, die in einer Menge von etwa 0,5 bis 6 Teilen, ausgedrückt in Phosphor, pro 100 Gewichtsteile halogenierte Polyether-Polyole vorhanden ist.

6. Feuerfeste harte Polyurethanschaumstoffe gemäß einem der Ansprüche 1 bis 5, dadurch gekennzeichnet, daß das Treibmittel aus 1,1-Dichlor-1-fluorethan besteht.

7. Zur Herstellung von feuerfesten harten Polyurethanschaumstoffen bestimmte Zusammensetzungen, dadurch gekennzeichnet, daß sie als wesentliche Bestandteile wenigstens ein halogeniertes Polyether-Polyol, wenigstens ein unter 1,1-Dichlor-1-fluorethan und 1,1,1-Trifluor-2,2-dichlorethan ausgewähltes Treibmittel und Ethylenglykol umfassen.

8. Zusammensetzungen gemäß Anspruch 7, dadurch gekennzeichnet, daß das Ethylenglykol in einer Menge von wenigstens 0,5 Teil pro 100 Gewichtsteile halogenierte Polyether-Polyole vorhanden ist.

9. Zusammensetzungen gemäß Anspruch 7, dadurch gekennzeichnet, daß das Ethylenglykol in einer Menge von höchstens 6,5 Teilen pro 100 Gewichtsteile halogenierte Polyether-Polyole vorhanden ist.

10. Zusammensetzungen gemäß Anspruch 7, dadurch gekennzeichnet, daß sie auch eine unter den Phosphorestern und Phosphonaten ausgewählte organische Phosphorverbindung umfassen.

11. Zusammensetzungen gemäß Anspruch 10, dadurch gekennzeichnet, daß die organische Phosphorverbindung in einer Menge von etwa 0,5 bis 6 Teilen, ausgedrückt in Phosphor, pro 100 Gewichtsteile halogenierte Polyether-Polyole vorhanden ist.

12. Zusammensetzungen gemäß einem der Ansprüche 7 bis 11, dadurch gekennzeichnet, daß das Treibmittel aus 1,1-Dichlor-1-fluorethan besteht.

13. Verfahren zur Herstellung von feuerfesten harten Polyurethanschaumstoffen durch Reaktion von halogenierten Polyether-Polyolen mit organischen Polyisocyanaten in Gegenwart eines Treibmittels, dadurch gekennzeichnet, daß das Treibmittel einen Wasserstoff enthaltenden Chlorfluorkohlenwasserstoff umfaßt, der unter 1,1-Dichlor-1-fluorethan und 1,1,1-Trifluor-2,2-dichlorethan ausgewählt ist, und dadurch, daß die Reaktion in Gegenwart von Ethylenglykol durchgeführt wird.

14. Verfahren gemäß Anspruch 13, dadurch gekennzeichnet, daß das Ethylenglykol in einer Menge von wenigstens 0,5 Teil pro 100 Gewichtsteile halogenierte Polyether-Polyole eingesetzt wird.

15. Verfahren gemäß Anspruch 13, dadurch gekennzeichnet, daß das Ethylenglykol in einer Menge von höchstens 6,5 Teilen pro 100 Gewichtsteile halogenierte Polyether-Polyole vorhanden ist.

16. Verfahren gemäß Anspruch 13, dadurch gekennzeichnet, daß die Reaktion auch in Gegenwart einer unter den Phosphorestern und Phosphonaten ausgewählten organischen Phosphorverbindung erfolgt.

17. Verfahren gemäß Anspruch 16, dadurch gekennzeichnet, daß die organische Phosphorverbindung in einer Menge von etwa 0,5 bis 6 Teilen, ausgedrückt in Phosphor, pro 100 Gewichtsteile halogenierte Polyether-Polyole eingesetzt wird.

18. Verfahren gemäß einem der Ansprüche 13 bis 17, dadurch gekennzeichnet, daß das Treibmittel aus 1,1-Dichlor-1-fluorethan besteht.

## Claims

1. Flame-retardant rigid polyurethane foams produced using halogenated polyether-polyols and at least one blowing agent chosen from 1,1-dichloro-l-fluoroethane and 1,1,1-trifluoro-2,2-dichloroethane in the presence of ethylene glycol.

2. Flame-retardant rigid polyurethane foams according to Claim 1, characterised in that they are produced in the presence of ethylene glycol present at a concentration of at least 0.5 part per 100 parts by weight of halogenated polyether-polyols.

3. Flame-retardant rigid polyurethane foams according to Claim 1, characterised in that they are produced in the presence of ethylene glycol present at a concentration of at most 6.5 parts per 100 parts of halogenated polyether-polyols.

4. Flame-retardant rigid polyurethane foams according to Claim 1, characterised in that they are produced in the presence also of a phosphorated organic compound chosen from the phosphoric esters and the phosphonates.

5. Flame-retardant rigid polyurethane foams according to Claim 4, characterised in that they are produced in the presence of a phosphorated organic compound present at a concentration of approximately 0.5 to 6 parts, expressed as phosphorus, per 100 parts by weight of halogenated polyether-polyols.

6. Flame-retardant rigid polyurethane foams according to any one of Claims 1 to 5, characterised in that the blowing agent consists of 1,1-dichloro-1- fluoroethane.

7. Compositions intended for the manufacture of flame-retardant rigid polyurethane foams, characterised in that they comprise, by way of essential ingredients, at least one halogenated polyether-polyol, at least one blowing agent chosen from 1,1-dichloro-1-fluoroethane and 1,1,1-trifluoro-2,2-dichloroethane, and ethylene glycol.

8. Compositions according to Claim 7, characterised in that ethylene glycol is present at a concentration of at least 0.5 part per 100 parts by weight of halogenated polyether-polyols.

9. Compositions according to Claim 7, characterised in that ethylene glycol is present at a concentration of at most 6.5 parts per 100 parts of halogenated polyether-polyols.

10. Compositions according to Claim 7, characterised in that they also comprise a phosphorated organic compound chosen from the phosphoric esters and the phosphonates.

11. Compositions according to Claim 10, characterised in that the phosphorated organic compound is present at a concentration of approximately 0.5 to 6 parts, expressed as phosphorus, per 100 parts by weight of halogenated polyether-polyols.

12. Compositions according to any one of Claims 7 to 11, characterised in that the blowing agent consists of 1,1-dichloro-l-fluoroethane.

13. Process for the manufacture of flame-retardant rigid polyurethane foams by reaction of halogenated polyether-polyols with organic polyisocyanates in the presence of a blowing agent, characterised in that the blowing agent comprises a chlorofluorinated hydrocarbon containing hydrogen chosen from 1,1-dichloro-1- fluoroethane and 1,1,1-trifluoro-2,2-dichloroethane and in that the reaction is carried out in the presence of ethylene glycol.

14. Process according to Claim 13, characterised in that ethylene glycol is used at a concentration of at least 0.5 part per 100 parts by weight of halogenated polyether-polyols.

15. Process according to Claim 13, characterised in that ethylene glycol is present at a concentration of at most 6.5 parts per 100 parts by weight of halogenated polyether-polyols.

16. Process according to Claim 13, characterised in that the reaction is carried out in the presence also of a phosphorated organic compound chosen from the phosphoric esters and the phosphonates.

17. Process according to Claim 16, characterised in that the phosphorated organic compound is used at a concentration of approximately 0.5 to 6 parts, expressed as phosphorus, per 100 parts by weight of halogenated polyether-polyols.

18. Process according to any one of Claims 13 to 17, characterised in that the blowing agent consists of 1,1-dichloro-1-fluoroethane.
